(19)

Europäisches Patentamt

European Patent Office

Office européen des brevets

(11) **EP 4 492 298 A1**

(12) # EUROPEAN PATENT APPLICATION

(43) Date of publication:
**15.01.2025 Bulletin 2025/03**

(21) Application number: **24156260.2**

(22) Date of filing: **07.02.2024**

(51) International Patent Classification (IPC):
***G06N 10/40*** *(2022.01)*

(52) Cooperative Patent Classification (CPC):
**G06N 10/40;** G06N 10/60

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.07.2023 EP 23185603**

(71) Applicant: **Kipu Quantum GmbH
76137 Karlsruhe (DE)**

(72) Inventors:
• **HERNANI MORALES, Carlos
46022 Valencia (ES)**

• **ALVARADO, Gabriel
Shanghai (CN)**
• **ALBARRAN-ARRIAGADA, Francisco
173 Santiago (CL)**
• **VIVES-GILABERT, Yolanda
03750 Pedreguer (ES)**
• **SOLANO, Enrique
10405 Berlin (DE)**
• **MARTIN-GUERRERO, José
46100 Burhassot (ES)**

(74) Representative: **Hoppe, Georg Johannes
Darani Anwaltskanzlei
Hohenzollerndamm 117
14199 Berlin (DE)**

(54) **SUPERCONDUCTING QUANTUM MEMRISTOR**

(57)     The invention provides a method for configuring superconducting quantum memristors based on the architecture of a conductance-asymmetric superconducting quantum interference device (CA-SQUID). The method includes defining the initial state of each quantum memristor as a two-level system parametrized in the Bloch sphere, determining the proportionality constant of the spectral density and the frequency of the quantum memristor, and selecting the values of coupling between quantum memristors, considering coupling by either capacitors or inductors, using a set of optimal parameters. The optimal configuration may be determined by maximizing the memory effects of the hysteresis curve in the current vs voltage plane, as measured by form factor.

EP 4 492 298 A1

**Description**

The invention relates to neuromorphic quantum computing. Specifically, the invention is defined by the appended independent claims. Embodiments of the invention are defined in the dependent claims.

The invention also relates to a system design, in particular to an optimal configuration of a superconducting quantum memristor in superconducting circuits. The invention provides a method for configuring superconducting quantum memristors based on the architecture of a conductance-asymmetric superconducting quantum interference device (CA-SQUID). In particular embodiments, the method is based on determining the optimal configuration of superconducting quantum memristors by maximizing the memristive behavior in the hysteretic response of the superconducting quantum memristor device.

The method of the invention comprises, in particular embodiments, defining the initial state of each quantum memristor as a two-level system parametrized in the Bloch sphere, determining the proportionality constant of the spectral density and the frequency of the quantum memristor, and selecting the values of coupling between quantum memristors, considering coupling by either capacitors or inductors, using a set of parameters, in particular optimal parameters. The optimal configuration is determined by maximizing the memory effects of the hysteresis curve in the current vs voltage plane, as measured by form factor. The invention also provides specific values for the optimal configuration of the initial state, spectral density, and coupling between quantum memristors.

**Short Description of the Invention**

This summary is provided to introduce a selection of concepts in a simplified form that are further described below in a more detailed description and the examples. This summary is not intended to identify key features of the invention, nor is it intended to be used to limit the scope of the invention.

The object of the present invention is to provide improved quantum memristive devices for use in superconducting circuits.

This object is achieved by the invention. The optimal configuration of the quantum memristive device of the invention maximizes the memristive response of each device while maintaining high levels of quantum correlations.

In a first aspect, the invention refers to a method, in particular to a computer-implemented method for configuring one superconducting quantum memristor with a conductance-asymmetric superconducting quantum interference device (CA-SQUID).

In certain embodiments, the method comprises the steps of:

a) Defining or initializing an initial state of the superconducting quantum memristor as a two-level system parametrized in a Bloch sphere as given by $|\Psi\ell(\theta_\ell,\eta_\ell)\rangle = \cos(\theta_\ell/2)|0\rangle + e^{i\eta\ell} \sin(\theta_\ell/2)|1\rangle$ , and

b) Determining a proportionality constant $\lambda_\ell$ of the spectral density and an input driving frequency, in particular via flux control, of the quantum memristor as given by $\boldsymbol{S_{QP}}(\omega_\ell) = \lambda_\ell\omega_\ell$.

In certain embodiments, the initial state of a single quantum memristor is given by the parameters $\theta_\ell = \pi/2$ and $\eta_\ell$ **= 1.5309.**

In certain embodiments, the proportionality constant of the spectral density is $\lambda_\ell$ **= 2.1387.**

In certain embodiments, $\theta_\ell = \pi/2$ , $\eta_\ell$ **= 1.5309** and/or $\lambda_\ell$ **= 2.1387.**

A single superconducting quantum memristor is configured by specifying its initial state and the proportionality constant. These parameters do not depend on each other. The initial state is separate in that it is not affected and does not affect the proportionality constant, but both are necessary to configure a single quantum memristor.

In a second aspect, the invention refers to a method for configuring a system of at least two coupled superconducting quantum memristors with a conductance-asymmetric superconducting quantum interference device (CA-SQUID).

In certain embodiments, the method comprising the steps of:

a) Defining (Initializing) an initial state of the superconducting quantum memristor as a two-level system parametrized in a Bloch sphere as given by $|\Psi_\ell(\theta_\ell,\eta_\ell)\rangle = \boldsymbol{\cos(\theta_\ell/2)|0\rangle + e^{i\eta\ell} \sin(\theta_\ell/2)|1\rangle}$,

b) Determining a proportionality constant $\lambda_\ell$ of the spectral density and an input driving frequency, in particular via flux control, of the quantum memristor as given by $\boldsymbol{S_{QP}}(\omega_\ell) = \lambda_\ell\omega_\ell$, and

c) Selecting values of coupling (through capacitors or inductors or both together) between the two quantum memristors, in particular using a set of parameters, for example, the parameters that are disclosed herein.

The configuration of two coupled quantum memristors is specified by the initial state of each quantum memrsitor (uniquely define by the angles theta and eta), the proportionality constant, and additionally the coupling, either by capacitors or inductors or both. Steps a) and b) are sufficient to configure a single quantum memristor, and step c) needs to be performed to configure a plurality, in particular two coupled quantum memristors.

In certain embodiments of the method, the parameters are determined by maximizing the memory effects of the hysteresis curve in a current vs voltage plane, as measured by form factor.

In certain embodiments of the method, the configuration of the initial state of two coupled quantum memristors is given by the parameters $\theta_\ell = \pi/2$ and $\eta_\ell$ = **1.5309.**

In certain embodiments of the method, the configuration of the two coupled quantum memristors of the proportionality constant in the spectral density is $\lambda_\ell$ = **2.1387.**

In certain embodiments of the method, the configuration for the coupling of two quantum memristors, when they are coupled by either a capacitor of capacitance $\boldsymbol{C_c}$, and/or an inductor of inductance, $\boldsymbol{L_c}$, is given by $\boldsymbol{C_c}$ = **0.5714 [pF]** and $\boldsymbol{L_c}$ = **2.4490 [nH].**

In certain embodiments of the method, the configuration in the sense of initial state, proportionality constant of spectral density and capacitive and inductive coupling is given by $\theta_\ell = \pi/2$ and $\eta_\ell$ = **1.5309** and $\lambda_\ell$ = **2.1387** and $\boldsymbol{C_c}$ = **0.5714 [pF]** and $\boldsymbol{L_c}$ = **2.4490 [nH]** , respectively.

In a third aspect, the invention refers to a superconducting quantum memristor, obtained or constructed by a method as described herein.

In certain embodiments of the method of the invention, $\theta_\ell = \pi/2,$ $\eta_\ell$ = **1.5309** and/or $\lambda_\ell$ = **2.1387.**

In a fourth aspect, the invention refers to a system of two coupled superconducting quantum memristors, obtained or constructed by a method of any of claims 5 to 10.

In certain embodiments of the method of the invention, $\theta_\ell = \pi/2,$ $\eta_\ell$ = **1.5309,** and/or $\lambda_\ell$ = **2.1387.**

In a fifth aspect, the invention refers to a data processing apparatus/device/system comprising means for carrying out [the steps of] the method for configuring one superconducting quantum memristor and for configuring a system of at least two coupled superconducting quantum memristors.

In a sixth aspect, the invention refers to a computer program [product] comprising instructions which, when the program is executed by a computer, cause the computer to carry out [the steps of] the method for configuring one superconducting quantum memristor and for configuring a system of at least two coupled superconducting quantum memristors.

In a seventh aspect, the invention refers to a computer-readable [storage] medium comprising instructions which, when executed by a computer, cause the computer to carry out [the steps of] the method for configuring one superconducting quantum memristor and for configuring a system of at least two coupled superconducting quantum memristors.

Other features and advantages of the invention will be apparent upon reading the detailed description and reviewing the accompanying drawings of the figures.

**Detailed description of the Invention**

Various embodiments of the invention are further described in more detail with reference to the accompanying drawings and the examples. However, the invention may be embodied in many other forms and should not be construed as limited to any certain structure or function discussed in the following description.

According to the description, it will be apparent to the ones skilled in the art that the scope of the invention encompasses any embodiment thereof, which is disclosed herein, irrespective of whether this embodiment is implemented independently or in concert with any other embodiment of the invention. For example, the method disclosed herein may be implemented in practice by using any numbers of the embodiments provided herein. Furthermore, it will be understood that any embodiment of the invention may be implemented using one or more of the elements presented in the appended claims.

1) Classical memristors

The memristor (memory resistor) is an electrical device whose resistance depends on the history of charges crossing through the material, and is part of the broader class of resistance switching devices. Memristors are characterized by a hysteretic response that is pinched at the origin and which can be explained by Kubo's response theory developed in 1957. The memristor was postulated as the fourth fundamental passive circuit element in addition to the resistor, capacitor, and inductor by L. Chua in 1971 and experimentally demonstrated with doped semiconductors by HP labs in 2008. The concept of memristor is later extended to a more general class of devices called memristive devices, defined by the following equations:

$$y = f(s, u, t)u,$$

$$\dot{s} = g(s, u, t),$$

wherin u and y denote input and output variables respectively, and s denotes a state variable, all variables are assumed to be dependent on time t. The equations that characterize ideal memristors are recovered by setting *f(s, u, t)* = *f(s)* and *g(s, u, t)* = *g(u),* the memristive equations written in this form are also called a state dependent Ohm's law when *u* and *y* correspond to current and voltage.

Memristors have been utilized in the field of neuromorphic computing for the design of integrated devices such as artificial neural networks. The significance of memristors in this context is due to their unique memory effects and nonlinear dynamics, which closely resemble the behavior of neural synapses in the human brain. These properties allow memristors to effectively mimic the way that neurons communicate and process information, making them an ideal building block for neuromorphic computing systems.

One of the key advantages of using memristors in neuromorphic computing is that they enable a departure from the traditional von Neumann computing paradigm, which separates memory and processing units and is subject to the von Neumann bottleneck. This bottleneck refers to the limited data transfer rate between the memory and processing units, which can significantly slow down computation. By contrast, memristor-based neuromorphic computing systems integrate memory and processing into a single unit, allowing for faster and more efficient computation.

2) Quantum memristors

Quantum memristors are obtained by implementing the characteristic equations of classical memristor with quantum observables of a quantum system. These equations can be the state dependent Ohm's law, or the generalized version for memristive systems. In principle, any device that satisfies these equations can be considered a quantum memristor, therefore they are not bound to any specific platform. Quantum memristors have been proposed on a number of platforms, including photonics, and superconducting circuits.

One can define a quantum memristor analogously to their classical counterpart. A quantum memristor is a quantum system with observables $\hat{y}$ and $\hat{u}$ whose expectation values $\langle\hat{y}\rangle$ and $\langle\hat{u}\rangle$ follow the relations

$$\langle\hat{y}\rangle = G\big(\langle\hat{x}\rangle, \langle\hat{u}\rangle, t\big)\langle\hat{u}\rangle$$

$$\langle\dot{\hat{x}}\rangle = F\big(\langle\hat{x}\rangle, \langle\hat{u}\rangle, t\big)$$

Here, *G(⟨x̂⟩,⟨û⟩,t)* and *F(⟨x̂⟩,⟨û⟩,t)* are the quantum analog to the response and state variable function, respectively.

Neuromorphic quantum computing (NQC) applies brain-inspired quantum algorithms to quantum hardware, potentially speeding up calculations through superposition and entanglement. One strategy for NQC is using parameterized quantum circuits and machine learning to formulate neural networks on quantum processors. However, this approach is limited by the capabilities of current NISQ devices. An alternative strategy is to directly employ quantum systems which can natively implement the information processing and operations that appear in neuromorphic algorithms, with the goal of designing analog quantum neural networks. Quantum memristors are potential building blocks for these neural processes, due to their system dynamics.

Quantum memristors have been proposed for implementation in quantum photonics platforms. In fact, a single quantum memristor has been experimentally realized using a setup that includes a Mach-Zehnder interferometer and phase shifters in a photonic chip. The memristive response of the device is engineered using active feedback based on single-photon detection.

In this particular device, the generation of single-photon sources for large-scale architectures presents a significant challenge. Additionally, the generation of quantum correlations is not feasible within the device itself and must instead be provided by the input state. Despite these challenges, the successful realization of a single quantum memristor using a quantum photonics platform represents an important step towards the development of practical quantum memristive devices.

Quantum memristors have also been proposed in superconducting circuits as a type of quantum dissipative system. These systems exhibit memory behavior quantified by the form factor, which is controlled by a continuous-measurement feedback scheme that regulates the decoherence mechanism of the system. One proposed quantum memristor is an LC superconducting circuit, acting as a quantum harmonic oscillator coupled to a non-Markovian reservoir. The coupling is tuned to obtain a memristive response in the LC resonator. However, this proposal faces challenges in experimental realization and in coupling multiple devices into complex structures.

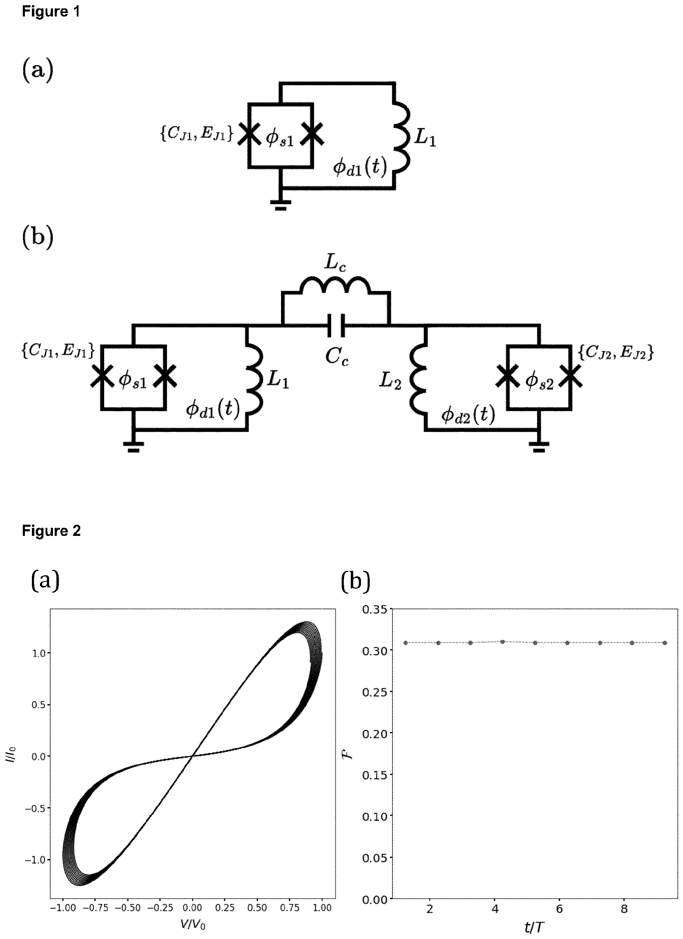

The invention refers to a quantum memristor comprising a conductance-asymmetric superconducting quantum interference device (CA-SQUID) coupled to an inductor (see figure 1). This design leverages the natural memristive behavior of Josephson junctions (JJs), based on the phase-dependent dissipative current known as the cosine term. The memristive response can be tuned by adjusting the magnetic flux through the circuit loop. This design is the only one studied beyond a single quantum memristor. When multiple devices are coupled using an inductor or a capacitor, the resulting evolution can create quantum correlations. However, the memristive response of the coupled system is sensitive to circuit parameters and has not been optimized.

At present, there are no scalable proposals for the implementation of quantum memristors that can go beyond a very small number of units. Most existing proposals focus on the implementation of a single quantum memristor, and there are significant challenges associated with composing multiple quantum memristive devices to construct more complex structures. This is a crucial step for the development of neuromorphic applications based on quantum memristors.

In order to successfully compose multiple quantum memristive devices, it is necessary to ensure that the resulting structure retains the memristive behavior of its constituent devices. Additionally, the composed structure (see Fig. 1b) must be able to handle the propagation of quantum correlations. These two key properties can only be achieved through careful design, as described in the present invention.

In certain aspects, the invention relates to a method for configuring a superconducting quantum memristor based on the architecture characterized by the conductance-asymmetric superconducting quantum interference device (CA-SQUID) as described herein and for configuring a system of two coupled superconducting quantum memristors as described herein.

In certain aspects, the invention provides a method for configuring superconducting quantum memristors adapted to or configured to using a CA-SQUID. The method may comprise initializing the state of each quantum memristor in a two-level system parametrized in the Bloch sphere given by $|\Psi_\ell(\theta_\ell, \eta_\ell)\rangle = \cos(\theta_\ell/2)|0\rangle + e^{i\eta\ell}\sin(\theta_\ell/2)|1\rangle$, determining the proportionality constant of the spectral density and the frequency of the quantum memristor, and selecting the values of coupling between quantum memristors, considering coupling by either capacitors or inductors, using a set of optimal parameters. The optimal configuration is determined by maximizing the memory effects quantified by the hysteresis curve obtained in the plot of current vs voltage (see Fig. 2 a), as measured by the form factor. Fixing the values of all the parameters considered, in certain embodiments the time evolution of the system is calculated and the voltage and current in the memristor is calculated. From the plot of current vs voltage over time, the form factor is calculated.

The invention also provides specific values for the optimal configuration of the initial state, spectral density, and coupling between quantum memristors.

In certain embodiments, one superconducting quantum memristor is designed using one CA-SQUID connected to an inductor. Two or more such quantum memristors can be coupled via another inductor or capacitor.

In certain embodiments, the method comprises:

a) Defining an initial state of each quantum memristor as a two-level system parametrized in a Bloch sphere as given by $|\Psi_\ell(\theta_\ell, \eta_\ell)\rangle = \cos(\theta_\ell/2)|0\rangle + e^{i\eta\ell}\sin(\theta_\ell/2)|1\rangle$,
b) Determining a proportionality constant $\lambda_\ell$ of the spectral density and the input driving frequency of the quantum memristor, as given by $S_{QP}(\omega_\ell) = \lambda_\ell\omega_\ell$, and
c) Selecting values of coupling between quantum memristors, coupling by either capacitors or inductors, using a set of optimal parameters.

In certain embodiments, the optimal configuration is determined by maximizing the memory effects of an hysteresis curve in the current vs voltage plane, as measured by form factor. Maximizing the memory effects of an hysteresis curve is done by varying the parameters that have been chosen, calculating the form factor that results from each of the values of the parameters, and choosing the configuration that yields the greatest value of the form factor, which in turn corresponds to the greatest memory effects (equating memory effects to form factor).

6) Engineering memristive response

In certain embodiments, the method for engineering a memristive response in quantum devices includes the use of appropriate quantum computing components and their interconnections, as well as the provision of mechanisms for implementing continuous feedback within suitable parameter ranges. Examples of such components in superconducting circuits include resonators, inductors, capacitors, Josephson junctions, and SQUIDs.

In one aspect, the present invention relates to a method for designing a quantum memristive system in superconducting circuits, as described herein. In specific embodiments, the invention may be applied to neuromorphic quantum computing for tasks such as pattern recognition and state discrimination.

The device is applicable to serve as the building block for designing correlated array networks for realizing powerful large scale quantum devices for applications to AI and quantum machine learning, for example, in image classification and entanglement detection.

Superconducting quantum circuits use Josephson junctions to realize qubits and their parallel connections to realize superconducting quantum interference devices (SQUIDs). Quantum computation with superconducting circuits exploits the intrinsic coherence of the superconducting state, into which all electrons are condensed. The number of superconducting electrons stores the quantum information. These systems are fabricated with thin film technology and operated at temperatures below 100 mK. Measurements are performed with integrated on-chip instruments via microwave driving. The access to macroscopic parameters allows tuning the system properties such as frequency and coupling strength and offers better scalability than other quantum platforms.

Superconducting quantum circuits employ Josephson junctions to create qubits and their parallel connections to form superconducting quantum interference devices (SQUIDs). The quantum information can be stored in the number of superconducting electrons, in the direction of a current or in oscillatory states. These systems are manufactured using thin-film technology and operated at temperatures below 100 mK, with measurements performed using integrated on-chip instruments via microwave driving. The ability to access macroscopic parameters enables the tuning of system properties such as frequency and coupling strength, providing better scalability than other quantum platforms.

Quantizing superconducting circuits involves computing the system's Lagrangian, deriving the classical Hamiltonian using Hamilton's equations, and promoting variables to quantum operators that satisfy canonical commutation relations.

The circuit Hamiltonian is the Hamiltonian of the superconducting circuit architecture obtained after circuit quantization.

An expectation value is the average outcome of repeated measurements of a physical quantity in a quantum experiment.

Quantum correlations are non-classical connections between quantum systems, derived from quantum mechanics. They are crucial for harnessing the power of quantum systems and have been quantified using metrics such as entanglement entropy, concurrence, and quantum discord.

The method for designing a quantum memristor in superconducting circuits with an optimal memristive response, suitable superconducting elements and a SQUID for flux control are utilized. Numerical optimization may be employed to determine the optimal parameter values.

The invention refers to optimum circuit parameters of single and coupled quantum memristors based on the CA-SQUID architecture. In the optimal regime, coupled quantum memristors exhibit maximal form factor in their hysteretic response and maximal quantum correlations, as measured by concurrence.

The invention also concerns the possibility to generate quantum correlations generated in the coupled system. This can be quantified using concurrence, to investigate the quantum correlations in the memristive subsystems.

A key component of the architecture for a quantum memristor is the CA-SQUID. This component consists of a small loop embedded by two different JJs threaded by a static DC magnetic flux. Each Josephson junction has two current contributions: a nondissipative current from Cooper pair tunneling, proportional to the critical current $I_{c\ell} = 2eE_J/h$, and a dissipative contribution from quasiparticle tunneling proportional to the conductance. Memristive behavior arises when the dissipative current from quasiparticle tunneling dominates over the nondissipative current from Cooper pair tunneling. This occurs when the junctions satisfy a condition for the junction conductance, $G_{Ni}$, and the energy of each band gap $\Delta_i$, as $G_{N1}/G_{N2} = \Delta_1/\Delta_2$ and the loop is threaded with a flux $\phi_{s\ell} = \pi$. When $\Delta_1 \gg \Delta_2$, the first junction acts as a shunt, allowing the CA-SQUID to be modeled as a capacitor coupled to a time-dependent admittance.

The quantum memristor model is composed of a CA-SQUID connected in parallel to an inductor $L_\ell$, forming a closed loop that is threaded by an external signal $\phi_{d\ell}$. Figure 1(a) shows the superconducting circuit diagram of the CA-SQUID quantum memristor, while Figure 1(b) illustrates two coupled quantum memristors with an associated Lagrangian which reads as follows

$$\mathcal{L} = \sum_{\ell=1,2} \left[ \frac{C_{\Sigma,\ell}}{2} \dot{\varphi}_\ell^2 + E_{J\ell} \cos\left( \frac{\varphi_\ell + \phi_{d\ell}(t)}{\varphi_0} \right) + E_{J\ell} \cos\left( \frac{\varphi_\ell + \phi_{d\ell}(t) + \phi_{s\ell}}{\varphi_0} \right) - \frac{\varphi_\ell^2}{2L_\ell} \right]$$
$$+ \frac{C_c(\dot{\varphi}_2 - \dot{\varphi}_1)^2}{2} - \frac{(\varphi_2 - \varphi_1)^2}{2L_c} \tag{1}$$

where $C_{\Sigma,1} = C_{J1} + C_{J2}$ and $C_{\Sigma,2} = C_{J3} + C_{J4}$ represent the effective capacitance of each SQUID, $E_{J\ell}$ denotes the Josephson energy in the $\ell$th SQUID, $C_c$ and $L_c$ are the coupling capacitance and inductance, respectively. By choosing $\phi_{s\ell} = \pi$ the nonlinear terms of the Josephson energy in the Lagrangian are canceled, which corresponds to canceling the critical currents to allow the quasiparticle current to dominate. A Legendre transformation is performed, and the circuit variables are promoted into quantum operators using $q_\ell \to \hat{q}_\ell = -2e\hat{n}_\ell$ and $\varphi_\ell/\varphi_0 \to \hat{\phi}_\ell$ to yield the Hamiltonian

$$H = \sum_{\ell=1,2} \left[ E_{C,\ell} \hat{n}_\ell^2 + \frac{E_{L,\ell}}{2} \hat{\phi}_\ell^2 \right] + E_{C,1,2} \hat{n}_1 \hat{n}_2 - E_{L,1,2} \hat{\phi}_1 \hat{\phi}_2 \qquad (2)$$

where $\hat{n}_\ell$ and $\hat{\phi}_\ell$ represent the dimensionless charge and phase operators of the $\ell$th quantum memristor. $E_{C,\ell} = 2e^2 C_{\ell,\ell}^{-1}$ and $E_{C,1,2} = 2e^2 C_{1,2}^{-1}$ are the charge energy where $C^{-1}$ is the inverse of the capacitance matrix. $E_{L,\ell} = 2\varphi_0 L_{\ell,\ell}^{-1}$ and $E_{L,1,2} = 2\varphi_0 L_{1,2}^{-1}$ are the inductive energy where $L^{-1}$ is the inverse of the inductance matrix, and $\varphi_0 = /2e$ is the reduced quantum flux. The inverses of the capacitance and inductance matrices are given by

$$C^{-1} = \frac{1}{\bar{C}} \begin{bmatrix} C_c + C_{\Sigma,2} & C_c \\ C_c & C_c + C_{\Sigma,1} \end{bmatrix}$$

$$L^{-1} = \begin{bmatrix} \frac{1}{L_c} + \frac{1}{L1} & -\frac{1}{Lc} \\ -\frac{1}{Lc} & \frac{1}{L_c} + \frac{1}{L2} \end{bmatrix}$$

where $\bar{C} = C_c(C_{\Sigma,1} + C_{\Sigma,2}) + C_{\Sigma,1} C_{\Sigma,2}$. The charge and phase operators can be written in terms of creation and annihilation operators

$$\hat{n}_\ell = \frac{i}{4g_\ell} \left( \hat{a}_\ell^\dagger - \hat{a}_\ell \right)$$

$$\hat{\phi}_\ell = 2g_\ell \left( \hat{a}_\ell^\dagger + \hat{a}_\ell \right) \qquad (3)$$

where $g_\ell = (E_{C,\ell}/32E_{L,\ell})^{1/4}$. Using the expressions above one can write the Hamiltonian as

$$H = \sum_{\ell=1,2} \hbar\omega_\ell a_\ell^\dagger a_\ell - \sqrt{\omega_1\omega_2}(\alpha - \beta)\left( a_1^\dagger a_2 + a_2^\dagger a_1 \right) \qquad (4)$$

where $\omega_\ell = \sqrt{2E_{C,\ell} E_{L,\ell}}/\hbar$ is the frequency of the $\ell$th QM. Here, $\alpha = E_{L,1}/\sqrt{E_{L,1} E_{L,2}}$ and $\beta = E_{C,1}/\sqrt{E_{C,1} E_{C,2}}$. The energy loss of the admittance is described as a quasiparticle bath at zero temperature, this mechanism can be modeled with the time-dependent master equation ( = 1)

$$\dot{\rho}(t) = i\left[ \hat{H}, \rho \right] + \sum_{\ell=1,2} \frac{\Gamma_\ell(t)}{2} \left( \hat{a}_\ell \rho \hat{a}_\ell^\dagger - \frac{1}{2}(\hat{a}_\ell^\dagger \hat{a}_\ell \rho + \rho \hat{a}_\ell^\dagger \hat{a}_\ell) \right) \qquad (5)$$

where $H$ is the Hamiltonian of Eq. (4) and $\Gamma_\ell$ is the time-dependent decay rate, with $\Gamma_\ell = |\langle 0| \sin(\hat{\phi}_\ell/2)|1\rangle|^2 S_{QP}(\omega_\ell)$, here $S_{QP}(\omega_\ell)$ is the spectral density of the quasiparticle bath and is here considered as $S_{QP}(\omega_\ell) = \lambda\omega_\ell$. Due to fluxoid quantization in the outer loop, $\Gamma_\ell$ can be expressed in terms of the external magnetic flux $\phi_{d\ell}(t)$, resulting in an effective decay rate $\Gamma_\ell = g_\ell^2 \omega_\ell \exp(-g_\ell^2)\left((1 + \cos[\phi_{d\ell}(t)])/2\right)$ driven by the external magnetic flux $\phi_{d\ell}(t) = \phi_{0,\ell} + A \sin(\omega_\ell t)$. The phase dependence of the decay rate on the magnetic flux is due to the quasiparticle current term in Josephson junctions.

From the master equation above one can obtain the equations of motion for the number and phase operator as follows

$$\frac{d}{dt} \langle \hat{n}_\ell \rangle = E_{L,\ell} \langle \hat{\phi}_\ell \rangle - E_{L,1,2}(\delta_{1,\ell} \langle \hat{\phi}_2 \rangle - \delta_{2,\ell} \langle \hat{\phi}_1 \rangle) - \frac{\Gamma_\ell}{2} \langle \hat{n}_\ell \rangle \qquad (6)$$

$$\frac{d}{dt}\langle \hat{\phi}_\ell \rangle = E_{C,\ell}\langle \hat{n}_\ell \rangle - E_{C,1,2}(\delta_{1,\ell}\langle \hat{n}_2 \rangle - \delta_{2,\ell}\langle \hat{n}_1 \rangle) - \frac{\Gamma_\ell}{2}\langle \hat{\phi}_\ell \rangle \qquad (7)$$

From the equations of motion one obtain the memristive variables, corresponding to the quasiparticle current $\hat{I}_{QP,\ell}(t)$ and voltage across the capacitor $\hat{V}_{cap,\ell}(t)$ which can be expressed as

$$\hat{I}_{QP,\ell}(t) = G_\ell(t)\hat{V}_{cap,\ell}(t) \qquad (8)$$

$$\hat{V}_{cap,\ell}(t) = -2e\langle \hat{n}_\ell(t) \rangle / C_{\Sigma,\ell} \qquad (9)$$

where $G_\ell = C_{\Sigma,\ell}\Gamma_\ell(t)/2$ is the memductance of each quantum memristor. The dynamics of the memristive variables define an hysteretic response characteristic of memristive behavior which depends on the initial state. In addition, it is assumed that the quantum memristors operate in the two-level approximation, ensured by the choice of initial state, which is parametrized as $|\Psi \ell(\theta_\ell, \eta_\ell)\rangle = \cos(\theta_\ell/2)|0\rangle + e^{i\eta\ell}\sin(\theta_\ell/2)|1\rangle$.

The system evolves according to Eq. (5) for a given initial state, and the memristive variables define a pinched hysteresis loop in the plane I/V. The area enclosed by the hysteresis loop is related to the memory effects of the device, which can be characterized by the form factor $\mathcal{F}$, defined as the ratio of the area enclosed by the hysteresis loop, **A**, to its corresponding perimeter **P**

$$\mathcal{F} = 4\pi\frac{A}{P^2} \qquad (10)$$

This quantity is preferred because it is invariant under scaling and allows for comparison of memory effects in the I/V response despite the decay present in the system.

Definitions

Quantum system

A quantum system is any system that obeys the laws of quantum mechanics. The system's state at any given time is described by a vector in a complex vector space which evolves over time following Schrodinger's equation. Each attribute of the system can be measured and is represented by a linear operator in its vector space. Typically, a quantum system is characterized by its Hamiltonian which corresponds to the total energy of the quantum system.

Two-level quantum systems

A two-level system is a quantum system that has only two possible states, which are typically denoted as $|0\rangle$ and $|1\rangle$ and form a basis set for the system. A particularly useful representation of the state of a two level system is the Bloch sphere representation. Here, each point on the surface of a sphere is assigned to a possible state of a qubit according to

$$|\Psi_\ell(\theta_\ell, \eta_\ell)\rangle = \cos(\theta_\ell/2)|0\rangle + e^{i\eta_\ell}\sin(\theta_\ell/2)|1\rangle \quad , (1)$$

where in spherical coordinates $\theta_\ell$ is the colatitude with respect to z-axis and $\eta_\ell$ is latitude with respect to x-axis. The states $|0\rangle$ and $|1\rangle$ are mapped to the poles of the sphere.

Josephson Junction

Josephson junction consists of two superconductors separated by a very thin insulating barrier. This barrier is thin enough that electrons can tunnel through it via the process of quantum tunneling. Josephson junctions are pivotal for the design and operation of superconducting qubits, which are one of the leading types of qubits currently used in quantum computers. The unique properties of Josephson junctions allow for the creation of superconducting circuits with quantized energy levels, which can be used to represent and manipulate quantum information.

Superconducting quantum interference device

A SQUID is a highly sensitive magnetometer used to measure extremely subtle magnetic fields, based on superconducting loops containing Josephson junctions. These devices exploit the quantum mechanical phenomena of superconductivity and the Josephson effect to detect minute changes in magnetic flux.

Conductance asymmetric Superconducting quantum interference device (CA-SQUID)

A SQUID made of unequal Josephson junctions (with different bandgaps) is referred to as a conductance asymmetric (CA) SQUID.

Spectral Density

Spectral density is a measure that is related with the noise environment to which the qubits are exposed. Different types of noise can be characterized by their spectral density, which describes how the noise power is distributed over different frequencies.

Hysteresis

Hysteresis is a phenomenon that occurs in physical systems where the state of the system depends not only on its current environment but also on its past environment. This results in a delayed response, causing the system to take different paths to reach a particular state depending on its history. In memristors, when the applied signal is varied, the plot of input signal vs response signal shows a hysteresis curve, pinched at the origin. This is a signature property of memristors.

Form Factor

The form factor is used to quantify the memory of a quantum memristor. It is defined as $F = 4\pi A/P^2$, where $A$ is the area of the hysteresis loop and $P$ is the perimeter of the loop.

**Figures**

**Figure 1:** Schematic representation of superconducting quantum memristors. (a) Circuit diagram of a single quantum memristor, a CA-SQUID connected in parallel to an inductance $L_\ell$ forming a grounded loop threaded by a magnetic flux $\phi_{d1}(t)$. The inner loop of the SQUID is threaded by a static flux $\phi_{s1} = \pi$ which cancels the critical current. $C_{J1}$ and $E_{J1}$ are the effective capacitance and the Josephson energy of the CA-SQUID. (b) An embodiment of the invention, wherein two coupled quantum memristors are connected by a capacitor $C_c$ and an inductor $L_c$.

**Figure 2:** (a) Hysteresis curve of a single quantum memristor in the optimal configuration over 10 periods of the driving signal. (b) Form factor of the associated hysteresis curve, the form factor stays constant over time since it is invariant to decay. Time is in units of the period of the driving signal $T = 2\pi/\omega_\ell$.

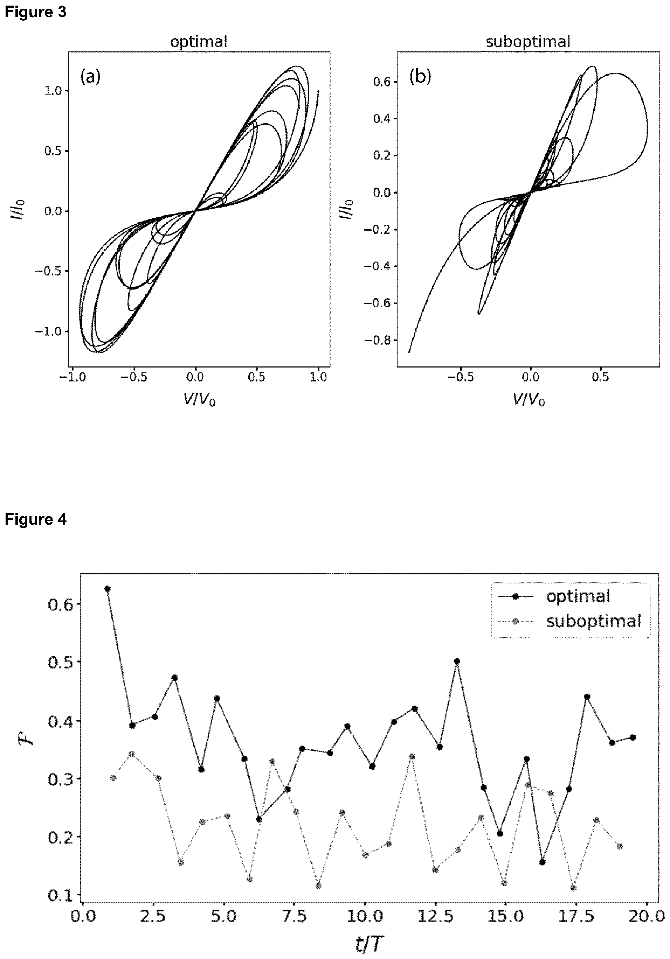

**Figure 3:** Pinched hysteresis curves of identical quantum memristors as a function of time for 20 periods of the driving signal. The optimal configuration, labeled as 'optimal', is compared with the configuration that yields the smallest form factor over time, denoted as 'suboptimal'. Time is in units of the period of the driving signal $\boldsymbol{T = 2\pi/\omega_\ell}$.

**Figure 4:** Form factor of the hysteresis curves of Fig. 3 as a function of time, in units of the period of the driving signal $\boldsymbol{T = 2\pi/\omega_\ell}$. The optimal configuration, denoted as 'optimal' is compared with the configuration that yields the smallest form factor over time, denoted as 'suboptimal'. As can be seen, the form factor can change significantly between periods, but the optimal configuration attains a higher form factor over the course of the evolution.

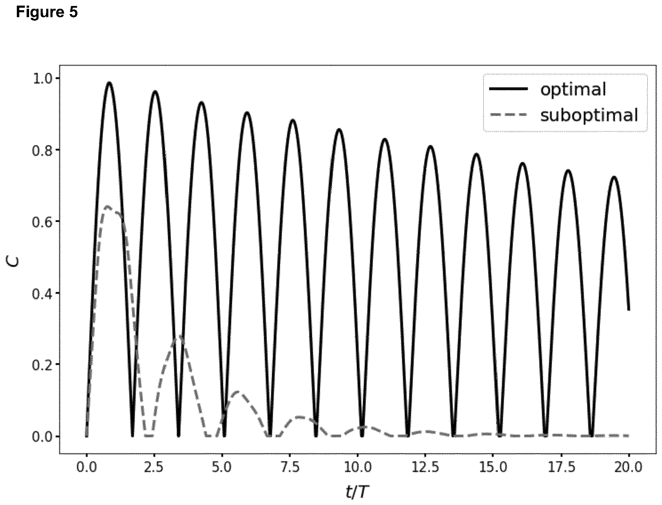

**Figure 5:** Entanglement between the quantum memristors measured by concurrence as a function of time for 20 periods of the driving signal. The optimal configuration, which optimizes the form factor over time, displays high and long lasting entanglement, conversely, the configuration that minimizes the form factor displays smaller values of concurrence which decay much faster.

**Examples**

Optimal configuration of single microwave quantum memristor

The case of a single quantum memristor can be obtained by setting $C_c$ and $L_c$ to zero. By evaluating the time evolution for different initial states, parametrized as $|\Psi_\ell(\theta_\ell, \eta_\ell)\rangle = \cos(\theta_\ell/2)|0\rangle + e^{i\eta\ell}\sin(\theta_\ell/2)|1\rangle$, and plotting the current $\hat{I}_{\text{QP},\ell}(t)$ against the voltage $\hat{V}_{\text{cap},\ell}(t)$ one obtains the form factor of the corresponding hysteresis loop. The inventors conducted a numerical exploration of the parameter space of a single quantum memristor. The inventors varied several parameters, including the initial state parameters $\theta_\ell$ and $\eta_\ell$, the decay intensity controlled by the spectral density constant $\lambda_\ell$. Since the magnetic flux that drives the quantum memristor is set to be resonant with the device, the inventors found that the form factor is independent of the frequency $\omega_\ell$. As a result, the capacitance and inductance, represented by $C_\ell$ and $L_\ell$, have no impact on the form factor. Thus, for the two cases studied here, values have been assumed for capacitance and inductance which are experimentally feasible, taken from previous proposals, $C_\ell$ = **0.4868 [pF]**, and $L_\ell$ = **1.0270 [nH].** It was found that in all cases the optimal value of the amplitude in the initial state $\theta_\ell$ to be $\theta_\ell$ = $\pi/2$. Further evaluation of different evolutions allows us to determine the following optimal parameters:

| Parameters | Optimal value |
|---|---|
| $\theta_\ell$ | $\pi/2$ |
| $\eta_\ell$ | **1.5309** |
| $\lambda_\ell$ | **2.1387** |

Figure 1(a) shows the hysteresis curve in the I/V plane corresponding to the optimal parameters detailed above. The memristive behavior is very stable and decays slowly which corresponds to a constant form factor over time, as shown in Fig. 1(b). To facilitate comparison with the case of coupled quantum memristors, the current and voltage are divided by their expectation value in the state $|\Psi\ell(\theta_\ell = \pi/4, \eta_\ell = \pi/2)\rangle$, denoted by $I_0$ and $V_0$, respectively.

Coupled quantum memristors

Certain embodiments refer to a plurality of coupled quantum memristors. In particular, two quantum memristors can be coupled by either a capacitor or an inductor, as depicted in Fig. 1(b). By initializing each quantum memristor in the state $|\Psi_\ell(\theta\ell, \eta_\ell)\rangle = \cos(\theta_\ell/2)|0\rangle + e^{i\eta\ell}\sin(\theta_\ell/2)|1\rangle$ one can evaluate the time evolution for different cases and plot the corresponding current $\hat{I}_{\text{QP},\ell}(t)$ vs voltage $\hat{V}_{\text{cap},\ell}(t)$ hysteresis loop and obtain the corresponding form factor. It should be noted that for coupled quantum memristors the hysteresis loop in the I/V plane can change significantly over each period of the driving signal, and it is nontrivial to compare the dynamics corresponding to different configurations. The inventors numerically explored the parameter space of a coupled quantum memristors system varying the parameters of the initial state $\theta_\ell$, $\eta_\ell$, the intensity of the decay by the constant of the spectral density $\lambda_\ell$ and the coupling inductance and capacitance, $C_c$ and $L_c$, independently. The inventors searched for configurations that maximize the form factor of the resulting hysteresis loop over a fixed time interval. The parameter space was systematically explored and the time evolution of the system calculated with up to 10 periods of the driving signal $T = 2\pi/\omega_\ell$ and evaluate the form factor of the resulting hysteresis loop in the I/V plane. As in the case of a single quantum memristor, the inventors found that the optimal value of the amplitude of the initial state $\theta_\ell$ to be $\theta_\ell$ = $\pi/2$. The inventors found that in the configuration that yields the highest form factor the quantum memristors are identical. The optimal parameters are listed in following table:

| Parameters | Optimal value |
|---|---|
| $\theta_\ell$ | $\pi/2$ |
| $\eta_\ell$ | **1.5309** |
| $\lambda_\ell$ | **2.1387** |
| $C_c$ | **0.5714 [pF]** |
| $L_c$ | **2.4490 [nH]** |

Since the two quantum memristors have the same configuration, only a single value of each parameter is listed. The optimal configuration for the parametrization of the initial state and the amplitude of the spectral density are identical to the case of a single quantum memristor. Fig. 3 (a) shows the hysteresis loop of the optimal case, labeled as 'optimal', to facilitate comparison, the current and voltage is divided by their expectation value in the state $|\Psi_\ell(\theta_\ell = \pi/4, \eta_\ell = \pi/2)\rangle$, denoted by $I_0$ and $V_0$, respectively. The optimal case is compared with the set of parameters that yields the smallest form factor over the same time period, denoted by 'suboptimal', the corresponding hysteresis loop is shown in Fig. 3 (b). In Figure 4, a comparison of the form factor calculated for both the optimal and suboptimal configurations over the course of 20 periods of the driving signal is presented. The results clearly demonstrate that the form factor for the optimal configuration consistently exceeds that of the suboptimal configuration throughout the entire duration of the system's evolution.

In addition, the quantum correlations generated in the system by measuring the concurrence between the quantum memristors was examined. Concurrence is an entanglement monotone, defined for a mixed state of two two-level systems. It is calculated using the following formula

$$C(\rho) = \max\left(0, \epsilon_1 - \epsilon_2 - \epsilon_3 - \epsilon_4\right) \qquad (11)$$

wherein $\varepsilon_i$ are the eigenvalues in decreasing order of the Hermitian matrix

$$R = \sqrt{\sqrt{\rho}\tilde{\rho}\sqrt{\rho}} \qquad (12)$$

with

$$\tilde{\rho} = \left(\sigma_y \otimes \sigma_y\right)\rho^*\left(\sigma_y \otimes \sigma_y\right) \qquad (13)$$

Here, complex conjugation is taken in the eigenbasis of $\sigma_z$. Fig. 5 shows the concurrence between the quantum memristors as a function of time for 20 periods of the driving signal, $T = 2\pi/\omega_\ell$. The optimal configuration, denoted as 'optimal, with the configuration that yields the smallest form factor, denoted as 'suboptimal' was compared. Maximizing the memory effects as measured by the form factor leads to high entanglement during the time evolution of the system. In contrast, the configuration that minimizes the form factor has significantly less entanglement which decays much faster than the case denotes as 'optimal' as can be seen in Fig. 5. Therefore, the optimal configuration of the invention is relevant for applications in quantum machine learning with quantum reservoirs, where the dynamics of the quantum reservoir can generate entanglement and display strong memory effects.

## Claims

1.  A computer-implemented method for configuring a superconducting quantum memristor with a conductance-asymmetric superconducting quantum interference device (CA-SQUID), comprising the steps of:

    c) Defining an initial state of the superconducting quantum memristor as a two-level system parametrized in a Bloch sphere as given by $|\Psi_\ell(\theta_\ell, \eta_\ell)\rangle = \cos(\theta_\ell/2)|0\rangle + e^{i\eta_\ell}\sin(\theta_\ell/2)|1\rangle$, and
    d) Determining a proportionality constant $\lambda_\ell$ of the spectral density and an input driving frequency of the quantum memristor as given by $S_{QP}(\omega_\ell) = \lambda_\ell\omega_\ell$.

2.  The method of claim 1, wherein the initial state of a single quantum memristor is given by the parameters $\theta_\ell = \pi/2$ and $\eta_\ell = $ **1.5309.**

3.  The method of claim 1 or 2, wherein the proportionality constant of the spectral density is $\lambda_\ell$ **= 2.1387.**

4.  The method of any of claims 1 to 3, wherein $\theta_\ell = \pi/2$ and $\eta_\ell = $ **1.5309** and $\lambda_\ell$ **= 2.1387.**

5.  A method for configuring a system of two coupled superconducting quantum memristors with a conductance-asymmetric superconducting quantum interference device (CA-SQUID), comprising the steps of:

    d) Defining an initial state of the superconducting quantum memristor as a two-level system parametrized in a Bloch sphere as given by $|\Psi_\ell(\theta_\ell, \eta_\ell)\rangle = \cos(\theta_\ell/2)|0\rangle + e^{i\eta_\ell}\sin(\theta_\ell/2)|1\rangle$, and
    e) Determining a proportionality constant $\lambda_\ell$ of the spectral density and an input driving frequency of the quantum memristor as given by $S_{QP}(\omega_\ell) = \lambda_\ell\omega_\ell$, and

f) Selecting values of coupling between the two quantum memristors using a set of parameters.

6. The method of claim 5, wherein the parameters are determined by maximizing the memory effects of the hysteresis curve in a current vs voltage plane, as measured by form factor.

7. The method of claim 5 or 6, wherein the configuration of the initial state of two coupled quantum memristors is given by the parameters $\theta_\ell = \pi/2$ and $\eta_\ell$ = **1.5309.**

8. The method of any of claims 5 to 7, wherein the configuration of the two coupled quantum memristors of the proportionality constant in the spectral density is $\lambda_\ell$ = **2.1387.**

9. The method of any of claims 5 to 8, wherein the configuration for the coupling of two quantum memristors, when they are coupled by either a capacitor, of capacitance $C_c$, and an inductor, of inductance, $L_c$, is given by $C_c$ = **0.5714 [pF]** and $L_c$ = **2.4490 [nH].**

10. The method of any of claims 5 to 9, wherein the configuration in the sense of initial state, proportionality constant of spectral density and capacitive and inductive coupling is given by $\theta_\ell$ = **$\pi/2$** and $\eta_\ell$ = **1.5309** and $\lambda_\ell$ = **2.1387** and $C_c$ = **0.5714 [pF]** and $L_c$ = **2.4490 [nH].**

11. A superconducting quantum memristor, obtained by a method of any of claims 1 to 4.

12. The superconducting quantum memristor of claim 11, wherein
$\theta_\ell = \pi/2$, $\eta_\ell$ = **1.5309** and/or $\lambda_\ell$ = **2.1387.**

13. A system of two coupled superconducting quantum memristors, obtained by a method of any of claims 5 to 10.

14. The system of claim 13, wherein
$\theta_\ell = \pi/2$, $\eta_\ell$ = **1.5309,** and/or $\lambda_\ell$ = **2.1387.**

15. A computer program [product] comprising instructions which, when the program is executed by a computer, cause the computer to carry out [the steps of] the method of claims 1 to 5 or the method of claims 6 to 10.

**Figure 1**

(a)

(b)

**Figure 2**

(a)

(b)

**Figure 3**

**Figure 4**

**Figure 5**

Europäisches
Patentamt

European
Patent Office

Office européen
des brevets

# EUROPEAN SEARCH REPORT

Application Number

EP 24 15 6260

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHUBHAM KUMAR ET AL: "Entangled Quantum Memristors", ARXIV.ORG, CORNELL UNIVERSITY LIBRARY, 201 OLIN LIBRARY CORNELL UNIVERSITY ITHACA, NY 14853, 8 December 2021 (2021-12-08), XP091111008, * abstract * * page 1, left-hand column, line 1 - page 6, right-hand column, last line * * page 7, line 5 - page 11, line 15 * | 1-15 | INV. G06N10/40 |
| A | KUMAR S ET AL: "Tripartite Entanglement in Quantum Memristors", PHYSICAL REVIEW APPLIED, [Online] vol. 18, no. 3, 1 September 2022 (2022-09-01), XP093173020, US ISSN: 2331-7019, DOI: 10.1103/PhysRevApplied.18.034004 Retrieved from the Internet: URL:https://arxiv.org/pdf/2201.10309> [retrieved on 2024-06-18] * abstract * * page 1, left-hand column, line 1 - page 8, last line * | 1-15 | |
| X,P | X-Y QIU ET AL: "Microwave Quantum Memristors", ARXIV.ORG, CORNELL UNIVERSITY LIBRARY, 201 OLIN LIBRARY CORNELL UNIVERSITY ITHACA, NY 14853, 12 November 2023 (2023-11-12), XP091656987, * abstract * * page 1, left-hand column, line 1 - page 8, right-hand column, last line * * page 9, line 5 - page 13, line 30 * | 1-15 | |

TECHNICAL FIELDS
SEARCHED (IPC)

G06N

The present search report has been drawn up for all claims

| Place of search | Date of completion of the search | Examiner |
|---|---|---|
| The Hague | 25 June 2024 | Totir, Felix |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

......................................................................

& : member of the same patent family, corresponding
  document

EPO FORM 1503 03.82 (P04C01)